# EUROPÄISCHE PATENTSCHRIFT

(11) **EP 2 921 722 B1**
(45) Veröffentlichungstag und Bekanntmachung des Hinweises auf die Patenterteilung: **19.07.2017**
(21) Anmeldenummer: 15157392.0
(22) Anmeldetag: 03.03.2015
(51) Int. Cl.: F16B 7/18, F16B 37/04

(54) **MODUL ZUR BEFESTIGUNG AN EINER BEFESTIGUNGSEINRICHTUNG UND VERFAHREN ZUM BEFESTIGEN EINES MODULS**
MODULE FOR FIXATION ON A SECURING DEVICE AND METHOD FOR THE FIXATION OF A MODULE
MODULE DESTINÉ À ÊTRE FIXÉ SUR UN DISPOSITIF DE FIXATION ET PROCÉDÉ DE FIXATION D'UN MODULE

(30) Priorität: 19.03.2014 DE 102014205089
(43) Veröffentlichungstag der Anmeldung: 23.09.2015
(73) Patentinhaber: Siemens Aktiengesellschaft, 80333 München (DE)
(72) Erfinder: Berndt, Marcel, 47839 Krefeld (DE)

(56) Entgegenhaltungen:
- EP-A1- 2 246 577
- EP-A2- 1 653 090
- DE-U1- 29 714 621

## Beschreibung

Die Erfindung bezieht sich u. a. auf ein Verfahren zum Montieren eines Moduls an einer Befestigungseinrichtung, wobei zur Befestigung zumindest ein Nutenstein verwendet wird, nach dem Oberbegriff von Anspruch 1.

Solche Verfahren sind beispielsweise aus der EP 2 246 577 A1, die sich auf die Solartechnik bezieht, bekannt. Zum technischen Hintergrund gehören zudem die DE 297 14 621 U1 und die EP 1 653 090 A2, die jeweils ebenfalls Verfahren zur Montage eines Moduls an einer Befestigungseinrichtung zum Gegenstand haben.

Bekanntermaßen können Rohrmodule, die Rohre oder Schläuche am Fahrzeugboden von Schienenfahrzeugen halten, an schienenförmigen Befestigungseinrichtungen der Fahrzeuge montiert werden. Zum Befestigen der Rohrmodule dienen Nutensteine, die vor der Montage der Rohrmodule zunächst in die Befestigungsschienen eingeführt werden. Anschließend erfolgt die Montage der Rohrmodule, indem Schrauben, die durch die Rohrmodule hindurchgeführt werden, mit den bereits in den Befestigungsschienen befindlichen Nutensteinen verschraubt werden. Das Einschrauben der Schraubelemente in die Nutensteine ist relativ zeitaufwendig.

Der Erfindung liegt die Aufgabe zugrunde, ein Modulmontageverfahren anzugeben, das sich einfacher als das oben beschriebene Verfahren durchführen lässt.

Diese Aufgabe wird erfindungsgemäß durch ein Verfahren mit den Merkmalen gemäß Patentanspruch 1 gelöst. Vorteilhafte Ausgestaltungen des erfindungsgemäßen Verfahrens sind in Unteransprüchen angegeben.

Danach ist erfindungsgemäß vorgesehen, dass das Modul im Bereich der Befestigungseinrichtung eine Vormontagekammer aufweist, von der der Nutenstein vor der Montage vollständig oder zumindest abschnittsweise in einer vorgegebenen Ausrichtung relativ zur Vormontagekammer aufgenommen wird, das Modul im Bereich der Befestigungseinrichtung ausgerichtet wird, der Nutenstein, insbesondere entlang einer vorgegebenen Schieberichtung, aus der Vormontagekammer heraus in Richtung Befestigungseinrichtung, insbesondere translatorisch, geschoben wird und dabei in die Befestigungseinrichtung hinein geschoben wird und der in die Befestigungseinrichtung hinein geschobene Nutenstein in der Befestigungseinrichtung, insbesondere durch Drehen, gesichert wird, wobei die Vormontagekammer durch einen Graben in dem Modul gebildet wird, die Länge des Nutensteins - gesehen in Grabenlängsrichtung bei einer Ausrichtung des Nutensteins, die der Nutenstein in seiner in die Vormontagekammer eingeführten Vormontageposition einnimmt - größer gewählt wird als die Länge des Grabens in Grabenlängsrichtung und der Nutenstein in seiner Vormontageposition in Grabenlängsrichtung gesehen vorne und hinten aus dem Graben herausragt.

Ein wesentlicher Vorteil des erfindungsgemäßen Verfahrens ist darin zu sehen, dass zum Zeitpunkt der Montage des Moduls der oder die zur Befestigung vorgesehenen Nutensteine in einer Vormontagekammer des Moduls gehalten werden, und zwar in einer für das Einführen in eine externe Befestigungseinrichtung geeigneten Ausrichtung, so dass allein durch ein Schieben des Nutensteins aus der Vormontagekammer heraus in Richtung der externen Befestigungseinrichtung der Nutenstein automatisch in die Befestigungseinrichtung eingeführt und nachträglich dort fixiert werden kann. Mit anderen Worten ist es im Unterschied zu vorbekannten Verfahren nicht nötig, zunächst den Nutenstein in der Befestigungseinrichtung zu positionieren und erst nachträglich das zu installierende Modul mit dem Nutenstein zu verbinden, stattdessen können die Nutensteine am Modul vorpositioniert gehalten und vorverbunden (z. B. mit Schraubelementen) in die Befestigungseinrichtung eingeführt werden. Durch die erfindungsgemäße Vorgehensweise wird der Montageaufwand drastisch reduziert, was insbesondere im Falle einer Überkopfmontage einen erheblichen Vorteil darstellt.

Als besonders vorteilhaft wird es angesehen, wenn das beschriebene Verfahren im Fahrzeugbau, insbesondere beim Schienenfahrzeugbau, eingesetzt wird. Demgemäß wird es als besonders vorteilhaft angesehen, wenn als Modul ein Fahrzeugmodul an oder in einem Fahrzeug, insbesondere einem Schienenfahrzeug, montiert wird.

Vorzugsweise erfolgt eine fahrzeugseitige, insbesondere schienenfahrzeugseitige Montage, indem das Fahrzeugmodul mit dem in der Vormontagekammer vorjustiert gehaltenen Nutenstein im Bereich einer fahrzeugseitigen Befestigungseinrichtung justiert und ausgerichtet wird, der Nutenstein entlang einer vorgegebenen Schieberichtung aus der Vormontagekammer in Richtung der fahrzeugseitigen Befestigungseinrichtung geschoben und dabei in die fahrzeugseitige Befestigungseinrichtung hinein geschoben wird und der in die fahrzeugseitige Befestigungseinrichtung hinein geschobene Nutenstein in der fahrzeugseitigen Befestigungseinrichtung durch Drehen fixiert wird.

Besonders einfach und schnell kann eine Montage erfolgen, wenn die Befestigungseinrichtung eine Öffnung aufweist, die ein Durchführen des Nutensteins - zum Einführen des Nutensteins in die Befestigungseinrichtung - in einer vorgegebenen Ausrichtung des Nutensteins relativ zur Öffnung erlaubt und in einer dazu verdrehten Ausrichtung des Nutensteins verhindert, die Innenkontur der Vormontagekammer - im Querschnitt senkrecht zur Schieberichtung gesehen - an die Öffnung der Befestigungseinrichtung derart angepasst ist, dass die Ausrichtung des in der Vormontagekammer befindlichen Nutensteins das Durchführen des Nutensteins durch die Öffnung erlaubt, wenn das Modul relativ zur Befestigungseinrichtung bestimmungsgemäß ausgerichtet ist, das Modul derart ausgerichtet wird, dass die Ausrichtung des in der Vormontagekammer befindlichen Nutensteins das Einführen des Nutensteins in die Öffnung der Befestigungseinrichtung erlaubt, der Nutenstein aus der Vormontagekammer heraus und durch die Öffnung der Befestigungseinrichtung hindurch in die Befestigungseinrichtung geschoben wird und der Nutenstein an der Befestigungseinrichtung derart verdreht wird, dass er die Öffnung der Befestigungseinrichtung nicht mehr passieren kann und in der Befestigungseinrichtung gehalten wird.

Besonders vorteilhaft ist es, wenn das Modul ein Schraubelement aufweist, das mit einem vorderen Ende in den Nutenstein eingeschraubt ist. Die Vormontagekammer weist vorzugsweise eine Schraubelementöffnung auf, die der Nutensteinöffnung entlang der Schieberichtung gesehen gegenüberliegt und die auf der der Befestigungseinrichtung abgewandten Seite des Moduls von außen zugänglich ist. Das Herausschieben des Nutensteins aus der Vormontagekammer heraus und in die Befestigungseinrichtung hinein erfolgt bevorzugt durch ein Hineinschieben des Schraubelements in die Vormontagekammer entlang der Schieberichtung. Das Verdrehen des Nutensteins in der Befestigungseinrichtung erfolgt vorzugsweise durch Drehen des Schraubelements (z. B. durch reibungsbedingtes Mitdrehen des Nutensteins), solange, bis der Nutenstein an Anschläge der Befestigungseinrichtung anschlägt. Das Befestigen des Nutensteins an der Befestigungseinrichtung erfolgt bevorzugt durch weiteres Einschrauben des Schraubelements in den Nutenstein und Verklemmen des Nutensteins in der Befestigungseinrichtung.

Die Erfindung bezieht sich darüber hinaus auf ein Modul, insbesondere ein Fahrzeugmodul, zur Montage an einer Befestigungseinrichtung, insbesondere an oder in einem Fahrzeug, insbesondere einem Schienenfahrzeug. Erfindungsgemäß ist bezüglich eines solchen Moduls vorgesehen, dass das Modul eine Vormontagekammer aufweist, die einen Nutenstein vor der Montage des Moduls vollständig oder zumindest abschnittsweise aufnimmt und ein Verschieben des Nutensteins entlang einer vorgegebenen Schieberichtung aus einer Nutensteinöffnung der Vormontagekammer in Richtung einer externen Befestigungseinrichtung während der Montage des Moduls ermöglicht.

Bezüglich der Vorteile des erfindungsgemäßen Moduls sei auf die obigen Ausführungen im Zusammenhang mit dem erfindungsgemäßen Verfahren verwiesen.

Vorzugsweise wird der Nutenstein während des Transports zum Montageort sowie vor und während der Montage (also in der Vormontageposition des Moduls) in der Vormontagekammer form- und/oder kraftschlüssig gehalten. Alternativ oder zusätzlich kann der Nutenstein auch stoffschlüssig (z. B. durch Klebstoff) in der Vormontageposition gehalten werden.

Um eine geeignete Vorausrichtung des Nutensteins bei der Montage zu erreichen, wird es als vorteilhaft angesehen, wenn die Innenkontur der Vormontagekammer - im Querschnitt senkrecht zur Schieberichtung gesehen - eine vorgegebene Ausrichtung des in der Vormontagekammer befindlichen Nutensteins erzwingt, so dass der Nutenstein beim Herausschieben aus der Vormontagekammer diese vorgegebene Ausrichtung aufweist.

Bei einer besonders bevorzugten Ausgestaltung ist vorgesehen, dass das Modul ein Schraubelement aufweist, das mit seinem vorderen Ende in den Nutenstein eingeschraubt ist, und die Vormontagekammer eine der Nutensteinöffnung entlang der Schieberichtung gesehen gegenüberliegende Schraubelementöffnung aufweist, die ein Einschieben des Schraubelements durch die Schraubelementöffnung hindurch in die Vormontagekammer und damit ein Herausschieben des Nutensteins aus der Nutensteinöffnung heraus von außen ermöglicht.

Die Vormontagekammer ist durch einen Graben in dem Modul gebildet.

Die Länge des Nutensteins ist - gesehen in Grabenlängsrichtung bei einer Ausrichtung des Nutensteins, die der Nutenstein in seiner in die Vormontagekammer eingeführten Vormontageposition einnimmt - größer als die Länge des Grabens in Grabenlängsrichtung, so dass der Nutenstein in seiner Vormontageposition in Grabenlängsrichtung gesehen vorne und hinten aus dem Graben herausragt.

Die Erfindung bezieht sich darüber hinaus auf ein Fahrzeug, insbesondere ein Schienenfahrzeug mit mindestens einem Fahrzeugmodul, das am oder im Fahrzeug mittels mindestens eines Nutensteines an einer fahrzeugseitigen Befestigungseinrichtung befestigt ist. Bezüglich eines solchen Fahrzeugs wird erfindungsgemäß vorgeschlagen, dass das Fahrzeugmodul im Bereich der Befestigungseinrichtung eine Vormontagekammer aufweist, die zur vollständigen oder zumindest abschnittsweisen Aufnahme des Nutensteins vor der Montage geeignet ist und ein Schieben des Nutensteins aus der Vormontagekammer in Richtung Befestigungseinrichtung während der Montage des Fahrzeugsmoduls ermöglicht. Bezüglich der Vorteile des erfindungsgemäßen Fahrzeugs sei auf die obigen Ausführungen im Zusammenhang mit dem erfindungsgemäßen Modul und dem erfindungsgemäßen Verfahren verwiesen; so ist gemäß den obigen Erläuterungen ersichtlich, dass sich das erfindungsgemäße Fahrzeug besonders kostengünstig montieren lässt.

Die Öffnung der Befestigungseinrichtung ist vorzugsweise schlitzförmig. Bevorzugt handelt es sich bei der Befestigungseinrichtung um eine Befestigungsschiene, insbesondere eine C-Schiene. Das Fahrzeugmodul ist vorzugsweise ein Bodenmodul, das unten am Fahrzeugboden angebracht ist, oder ein Dachmodul, das auf dem Fahrzeugdach angebracht ist.

Bei einer besonders bevorzugten Ausgestaltung des Fahrzeugs ist vorgesehen, dass an der Befestigungseinrichtung als Fahrzeugmodule zwei oder mehr Haltemodule angebracht sind, die jeweils ein und dieselbe Fahrzeugkomponente oder ein und dieselben Fahrzeugkomponenten des Fahrzeugs halten, und die Haltemodule in Längsrichtung der Befestigungseinrichtung hintereinander angeordnet sind.

Als besonders vorteilhaft wird es angesehen, wenn das Fahrzeug mindestens zwei fahrzeugseitige Befestigungseinrichtungen in Form von parallelen Befestigungsschienen, insbesondere C-Schienen, aufweist, an den Befestigungsschienen jeweils zwei oder mehr Module in Form von Rohrhaltemodulen angebracht sind, die jeweils Rohre des Fahrzeugs und/oder Schläuche des Fahrzeugs halten, die Längsrichtung der Rohre oder Schläuche des Fahrzeugs parallel zur Schienenlängsrichtung der Befestigungsschiene angeordnet ist und die Rohrhaltemodule in Schienenlängsrichtung der Befestigungsschiene hintereinander angeordnet sind.

Die Erfindung wird nachfolgend anhand von Ausführungsbeispielen näher erläutert; dabei zeigen beispielhaft:
- Figur 1: ein Ausführungsbeispiel für ein erfindungsgemäßes Modul in einer Sicht von vorn,
- Figur 2: das Modul gemäß Figur 1 in einer Sicht von der Seite und
- Figuren 3-7: die Montage des Moduls gemäß den Figuren 1 und 2 an einer Befestigungsschiene, beispielsweise einer Befestigungsschiene eines Schienenfahrzeugs.

In den Figuren werden der Übersicht halber für identische oder vergleichbare Komponenten stets dieselben Bezugszeichen verwendet.

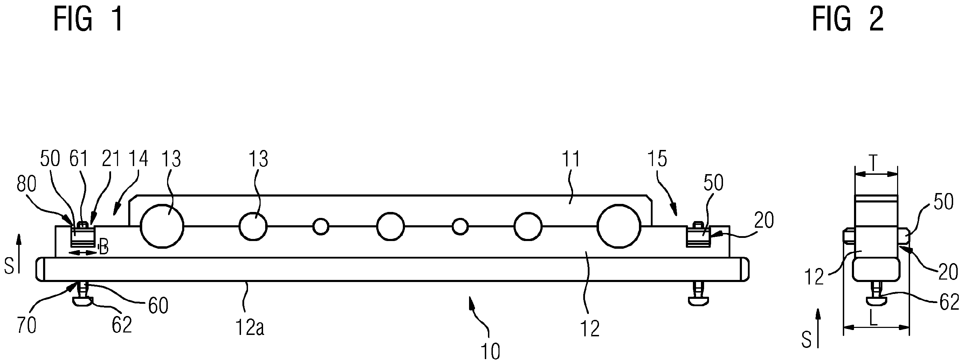

Die Figur 1 zeigt ein Modul in Form eines Haltemoduls 10, das ein in der Figur 1 oberes Klemmelement 11 und ein in der Figur 1 unteres Klemmelement 12 umfasst. Die beiden Klemmelemente 11 und 12 sind derart ausgeformt, dass sie - wie in der Figur 1 dargestellt - Durchgangsöffnungen 13 bilden, deren Längsrichtung sich in der Figur 1 senkrecht zur Bildebene durch das Haltemodul 10 hindurch erstreckt. Die Durchgangsöffnungen 13 können zur Aufnahme und zum Halten bzw. zum Einklemmen von Rohren oder Schläuchen oder dergleichen dienen und somit Rohrhaltemodule bilden.

Bei dem Haltemodul 10 ist das in der Figur 1 untere Klemmelement 12 breiter als das obere Klemmelement 11 ausgeführt, so dass das untere Klemmelement 12 zwei seitliche Randabschnitte 14 und 15 aufweist, die mit dem oberen Klemmelement 11 überschneidungsfrei sind und somit zur Montage des Haltemoduls 10 an externen Befestigungseinrichtungen, beispielsweise an externen Befestigungsschienen, herangezogen werden können.

Der in der Figur 1 linke Randabschnitt 14 ist mit einer Vormontagekammer 20 ausgestattet, die einen Nutenstein 50 vollständig oder zumindest abschnittsweise aufnimmt. Bei dem Ausführungsbeispiel gemäß Figur 1 ist die Vormontagekammer 20 schlitzförmig und wird durch einen Graben gebildet, dessen Längsrichtung sich senkrecht zur Bildebene in Figur 1 erstreckt, und zwar durch das gesamte untere Klemmelement 12 linear hindurch.

Die Form des Nutensteins 50 ist an die Form der Vormontagekammer 20 angepasst; so lässt sich in der Figur 1 erkennen, dass die Breite B des Nutensteins 50 der Breite der Vormontagekammer 20 entspricht. Aufgrund der an die Vormontagekammer 20 angepassten Formgestaltung des Nutensteins 50 ist sichergestellt, dass der Nutenstein 50 in der Vormontagekammer 20 nicht gedreht werden kann und seine Ausrichtung innerhalb der Vormontagekammer 20 beibehält.

In den Nutenstein 50 ist ein vorderes Ende 61 eines Schraubelements 60 eingeschraubt. Bei dem Schraubelement 60 kann es sich beispielsweise um eine Gewindestange, einen Bolzen, der zumindest abschnittsweise mit einem Gewinde ausgestattet ist, oder eine Schraube handeln. Nachfolgend wird beispielhaft davon ausgegangen, dass es sich bei dem Schraubelement 60 um eine Schraube mit einem Schraubenkopf 62 handelt.

Die Figur 1 zeigt das Haltemodul 10 vor der Montage an einer oder mehreren externen Befestigungseinrichtungen, also in seinem Vormontagezustand. In dem Vormontagezustand des Haltemoduls 10 ist das Schraubelement 60 mit seinem vorderen Ende 61 nur soweit in den Nutenstein 50 hineingeschraubt, dass der Schraubenkopf 62 von der Unterseite 12a des unteren Klemmelements 12 beabstandet ist.

Um das Schraubelement 60 in der in der Figur 1 dargestellten Weise mit dem Nutenstein 50 verschrauben zu können, ist in dem unteren Klemmelement 12 eine Schraubelementöffnung 70 vorgesehen, durch die die Vormontagekammer 20 von der Unterseite 12a des unteren Klemmelements 12 bzw. von unten zugänglich ist. Die Schraubelementöffnung 70 liegt einer Nutensteinöffnung 21 der Vormontagekammer 20 gegenüber; durch die Nutensteinöffnung 21 kann der Nutenstein 50 aus der Vormontagekammer 20 heraus und in Richtung einer externen Befestigungseinrichtung geschoben werden.

Um zu gewährleisten, dass der Nutenstein 50 in der in der Figur 1 dargestellten Position innerhalb der Vormontagekammer 20 verbleibt, solange sich das Haltemodul 10 in seinem Vormontagezustand befindet und noch nicht montiert wird, wird der Nutenstein 50 in der Vormontagekammer 20 vorzugsweise formschlüssig und/oder kraftschlüssig gehalten.

Ein kraftschlüssiges Halten des Nutensteins 50 in der Vormontagekammer 20 lässt sich beispielsweise dadurch gewährleisten, dass die Größe der Vormontagekammer 20 derart an die Größe des Nutensteins 50 angepasst ist, dass der Nutenstein 50 in der in der Figur 1 dargestellten Position in der Vormontagekammer 20 zumindest leicht verklemmt ist. Ein solches Verklemmen kann durch eine gewisse Rauigkeit der Oberfläche des Nutensteins 50 und/oder eine gewisse Rauigkeit auf der Innenseite der Vormontagekammer 20 unterstützt werden.

Alternativ oder zusätzlich kann ein formschlüssiges Halten des Nutensteins 50 in der Vormontagekammer 20 beispielsweise durch Rast- oder Formschlusselemente 80 erreicht werden. Derartige Rast- oder Formschlusselemente 80 sind vorzugsweise im Bereich der Nutensteinöffnung 21 der Vormontagekammer 20 am Klemmelement 12, im Inneren der Vormontagekammer 20 und/oder an der Außenseite des Nutensteins 50 vorgesehen. Die Rast- oder Formschlusselemente 80 können an dem Klemmelement 12 bzw. dem Nutenstein 50 angebracht oder einteilig angeformt sein. Handelt es sich bei dem unteren Klemmelement 12 und/oder dem Nutenstein 50 um ein Gussteil oder ein Spritzgussteil, so ist das Rast- oder Formschlusselement 80 vorzugsweise ein angegossenes oder angespritztes Teil.

Zum Zwecke der Montage des Haltemoduls 10 muss der Nutenstein 50 aus seiner Vormontagekammer 20 herausgeschoben oder herausgehoben werden. Ein solches Herausschieben des Nutensteins 50 entlang der Schieberichtung S lässt sich bei dem Ausführungsbeispiel gemäß Figur 1 durch ein Schieben des Schraubenkopfs 62 des Schraubelements 60 entlang der Schieberichtung S in Richtung der Schraubelementöffnung 70 und durch ein Hineinschieben des Schraubelements 60 in die Vormontagekammer 20 gewährleisten. Wird nämlich das Schraubelement 60 in die Vormontagekammer 20 bewegt, so wird dadurch der Nutenstein 50, der am vorderen Ende 61 des Schraubelements 60 angebracht bzw. verschraubt ist, entlang der Schieberichtung S aus der Vormontagekammer 20 herausgeschoben und kann somit in Kontakt mit einer externen Befestigungseinrichtung treten, die sich oberhalb des unteren Klemmelements 12 befindet.

Bei dem Ausführungsbeispiel gemäß Figur 1 ist auch der rechte Randabschnitt 15 mit einem Nutenstein 50 und einer Vormontagekammer 20 versehen, wie dies im Zusammenhang mit dem linken Randabschnitt 14 oben erläutert wurde. Die Ausführungen im Zusammenhang mit dem Randabschnitt 14 bzw. dem Nutenstein 50 und der Vormontagekammer 20 im Bereich des Randabschnitts 14 gelten für den Randabschnitt 15 somit in entsprechender Weise.

Die Figur 2 zeigt das Haltemodul 10 gemäß Figur 1 in einer seitlichen Sicht. Man erkennt den Nutenstein 50, der in der rinnen- bzw. grabenförmigen Vormontagekammer 20 eingelegt ist. Es lässt sich erkennen, dass die Länge L des Nutensteins 50 größer ist als die Tiefe T des Haltemoduls 10 bzw. die Tiefe der Vormontagekammer 20. Mit anderen Worten steht der Nutenstein 50 also vorn und hinten aus der Vormontagekammer 20 bzw. dem Haltemodul 10 heraus. Dadurch, dass der Nutenstein größer bzw. länger als das Haltemodul 10 ausgeführt ist, wird eine besonders große Haltekraft des Nutensteins 50 nach einer Befestigung an einer externen Befestigungseinrichtung erreicht; dies wird nachfolgend noch näher im Detail erläutert.

In der Figur 2 lässt sich darüber hinaus der Schraubenkopf 62 des Schraubelements 60 erkennen, der durch ein Verschieben entlang der Schieberichtung S ein Herausdrücken des Nutensteins 50 aus der Vormontagekammer 20 ermöglicht, wie dies im Zusammenhang mit der Figur 1 bereits erläutert worden ist.

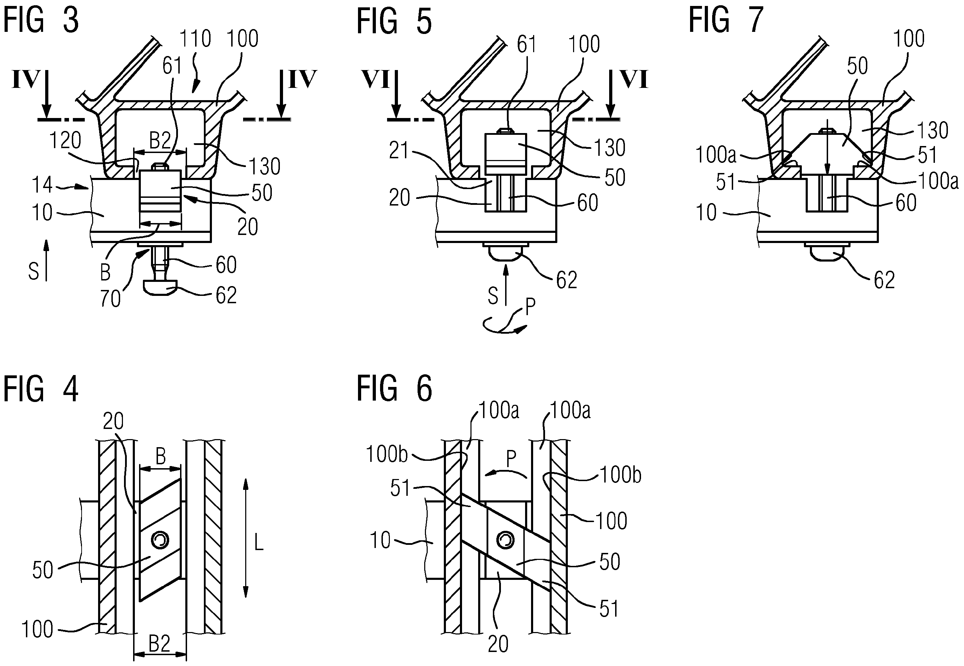

Die Figur 3 zeigt den in der Figur 1 gezeigten Randabschnitt 14 des Haltemoduls 10 näher im Detail, nachdem das Haltemodul 10 auf eine Befestigungseinrichtung 100 eines Schienenfahrzeugs 110 aufgesetzt worden ist. Bei der Befestigungseinrichtung 100 handelt es sich vorzugsweise um eine Befestigungsschiene, insbesondere um eine C-Schiene, deren Längsrichtung sich senkrecht zur Bildebene der Figur 3 erstreckt. Bei der Befestigungseinrichtung 100 handelt es sich vorzugsweise um ein Strangpressprofilteil, dessen Strangpressrichtung parallel zur Grabenlängsrichtung der Vormontagekammer 20 ausgerichtet ist.

Nachdem das Haltemodul 10 unterhalb der Befestigungseinrichtung 100 positioniert worden ist, wie dies die Figur 3 zeigt, befindet sich der Nutenstein 50 des Haltemoduls 10 unterhalb einer Öffnung 120 der Befestigungseinrichtung 100. Es lässt sich erkennen, dass die Breite B2 der Öffnung 120 mindestens so groß ist wie die Breite B des Nutensteins 50, so dass der Nutenstein 50 entlang der Schieberichtung S aus seiner Vormontagekammer 20 in das Innere 130 der Befestigungseinrichtung 100 hineingeschoben werden kann. Das Hineinschieben des Nutensteins 50 in das Innere 130 der Befestigungseinrichtung 100 erfolgt dadurch, dass der Schraubenkopf 62 des Schraubelements 60 entlang der Schieberichtung S in Richtung auf die Schraubelementöffnung 70 bzw. in Richtung auf die Vormontagekammer 20 geschoben wird.

Die Figur 4 zeigt die in der Figur 3 dargestellte Vormontagesituation des Haltemoduls 10 in einem Querschnitt entlang der Querschnittslinie IV-IV. Es lässt sich erkennen, dass die Länge L des Nutensteins 50 sehr viel größer ist als die Breite B2 der Öffnung 120 der Befestigungseinrichtung 100 sowie auch deutlich größer ist als die Breite B des Nutensteins bzw. der Vormontagekammer 20. Da - wie oben bereits erwähnt - die Breite B2 der Öffnung 120 größer ist als die Breite B des Nutensteins 50, lässt sich der Nutenstein 50 durch die Öffnung 120 hindurch in das Innere 130 (vgl. Figur 3) der Befestigungseinrichtung 100 hineinschieben.

Die Figur 5 zeigt einen Zwischenmontagezustand, nachdem der Nutenstein 50 von der in der Figur 3 dargestellten Position nach oben durch die Nutensteinöffnung 21 der Vormontagekammer 20 in das Innere 130 der Befestigungseinrichtung 100 geschoben worden ist. Das Schieben des Nutensteins 50 erfolgt ausschließlich durch eine translatorische Bewegung durch Schieben entlang der Schieberichtung S. Es erfolgt zu diesem Zeitpunkt kein Verdrehen bzw. keine rotatorische Bewegung des Nutensteins 50.

Erst nachdem der Nutenstein 50 das Innere 130 der Befestigungseinrichtung 100 erreicht hat, wie dies die Figur 5 darstellt, kann der Nutenstein 50 durch Drehen des Schraubelements 60 bzw. durch Drehen des Schraubenkopfes 62 entlang der Pfeilrichtung P gedreht werden. Ein solches Drehen erfolgt vorzugsweise durch innere Reibung automatisch, sobald der Schraubenkopf 62 mittels eines Schraubendrehers oder eines Akkuschraubers oder dergleichen verdreht wird.

Die Figur 6 zeigt die Situation des Nutensteins 50 nach dem Verdrehen entlang der Querschnittslinie VI-VI gemäß Figur 5. Es lässt sich erkennen, dass die äußeren Randabschnitte 51 beim Verdrehen des Nutensteins 50 an vorzugsweise parallele Anschläge 100b der Befestigungseinrichtung 100 anschlagen; nach dem Anschlagen bzw. nach dem Abschluss des Verdrehens des Nutensteins 50 befinden sich die äußeren Randabschnitte 51 in Überlappung mit Auflageflächen 100a der Befestigungseinrichtung 100 und liegen auf diesen Auflageflächen 100a auf. Wird das Schraubelement 60 nachfolgend noch weiter in den Nutenstand 50 hineingeschraubt, so kommt es zu einem Verspannen des Nutensteins 50 mit den Auflageflächen 100a der Befestigungseinrichtung 100, so dass der Nutenstein 50 fest auf den Auflageflächen 100a der Befestigungseinrichtung 100 verklemmt wird.

Die Figur 7 zeigt den gedrehten und verklemmten Nutenstein 50 im Inneren 130 der Befestigungseinrichtung 100 näher im Detail. Es lässt sich erkennen, dass die äußeren Randabschnitte 51 des Nutensteins 50 auf den Auflageflächen 100a der Befestigungseinrichtung 100 aufliegen und somit der Nutenstein 50 das Haltemodul 10 fest an der Befestigungseinrichtung 100 hält.

Obwohl die Erfindung im Detail durch bevorzugte Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Ansprüche zu verlassen.

## Patentansprüche

1. Verfahren zum Montieren eines Moduls (10) an einer Befestigungseinrichtung (100), wobei zur Befestigung zumindest ein Nutenstein (50) verwendet wird, wobei
- das Modul (10) im Bereich der Befestigungseinrichtung (100) eine Vormontagekammer (20) aufweist, von der der Nutenstein (50) vor der Montage vollständig oder zumindest abschnittsweise in einer vorgegebenen Ausrichtung relativ zur Vormontagekammer (20) aufgenommen wird,
- das Modul (10) im Bereich der Befestigungseinrichtung (100) ausgerichtet wird,
- der Nutenstein (50) aus der Vormontagekammer (20) heraus in Richtung Befestigungseinrichtung (100) geschoben wird und dabei in die Befestigungseinrichtung (100) hinein geschoben wird und
- der in die Befestigungseinrichtung (100) hinein geschobene Nutenstein (50) in der Befestigungseinrichtung (100), insbesondere durch Drehen, gesichert wird,
**dadurch gekennzeichnet, dass**
- die Vormontagekammer (20) durch einen Graben in dem Modul (10) gebildet wird,
- die Länge des Nutensteins (50) - gesehen in Grabenlängsrichtung bei einer Ausrichtung des Nutensteins (50), die der Nutenstein (50) in seiner in die Vormontagekammer (20) eingeführten Vormontageposition einnimmt - größer gewählt wird als die Länge des Grabens in Grabenlängsrichtung und
- der Nutenstein (50) in seiner Vormontageposition in Grabenlängsrichtung gesehen vorne und hinten aus dem Graben herausragt.

2. Verfahren nach Anspruch 1,
**dadurch gekennzeichnet, dass**
- die Befestigungseinrichtung (100) eine Öffnung (120) aufweist, die ein Durchführen des Nutensteins (50) - zum Einführen des Nutensteins (50) in die Befestigungseinrichtung (100) - in einer vorgegebenen Ausrichtung des Nutensteins (50) relativ zur Öffnung (120) erlaubt und in einer dazu verdrehten Ausrichtung des Nutensteins (50) verhindert,
- die Innenkontur der Vormontagekammer (20) - im Querschnitt senkrecht zur Schieberichtung (S) gesehen - an die Öffnung (120) der Befestigungseinrichtung (100) derart angepasst ist, dass die Ausrichtung des in der Vormontagekammer (20) befindlichen Nutensteins (50) das Durchführen des Nutensteins (50) durch die Öffnung (120) erlaubt, wenn das Modul (10) relativ zur Befestigungseinrichtung (100) bestimmungsgemäß ausgerichtet ist,
- das Modul (10) derart ausgerichtet wird, dass die Ausrichtung des in der Vormontagekammer (20) befindlichen Nutensteins (50) das Einführen des Nutensteins (50) in die Öffnung (120) der Befestigungseinrichtung (100) erlaubt,
- der Nutenstein (50) aus der Vormontagekammer (20) heraus und durch die Öffnung (120) der Befestigungseinrichtung (100) hindurch in die Befestigungseinrichtung (100) geschoben wird und
- der Nutenstein (50) an der Befestigungseinrichtung (100) derart verdreht wird, dass er die Öffnung (120) der Befestigungseinrichtung (100) nicht mehr passieren kann und in der Befestigungseinrichtung (100) gehalten wird.

3. Verfahren nach Anspruch 1 oder 2,
**dadurch gekennzeichnet, dass**
- das Modul (10) ein Schraubelement (60) aufweist, das mit einem vorderen Ende in den Nutenstein (50) eingeschraubt ist,
- die Vormontagekammer (20) eine Schraubelementöffnung (70) aufweist, die der Nutensteinöffnung (21) entlang der Schieberichtung (S) gesehen gegenüberliegt und auf der der Befestigungseinrichtung (100) abgewandten Seite des Moduls (10) von außen zugänglich ist,
- das Herausschieben des Nutensteins (50) aus der Vormontagekammer (20) heraus und in die Befestigungseinrichtung (100) hinein durch ein Hineinschieben des Schraubelements (60) in die Vormontagekammer (20) entlang der Schieberichtung (S) erfolgt,
- das Verdrehen des Nutensteins (50) in der Befestigungseinrichtung (100) durch Drehen des Schraubelements (60) erfolgt, insbesondere bis der Nutenstein (50) an Anschläge (100b) der Befestigungseinrichtung (100) anschlägt, und
- das Befestigen des Nutensteins (50) an der Befestigungseinrichtung (100) durch weiteres Einschrauben des Schraubelements (60) in den Nutenstein (50) und Verklemmen des Nutensteins (50) in der Befestigungseinrichtung (100) erfolgt.

4. Modul (10) zur Montage an einer Befestigungseinrichtung (100), wobei das Modul (10) eine Vormontagekammer (20) aufweist, die einen Nutenstein (50) vor der Montage des Moduls (10) vollständig oder zumindest abschnittsweise aufnimmt und ein Verschieben des Nutensteins (50) entlang einer vorgegebenen Schieberichtung (S) aus einer Nutensteinöffnung (21) der Vormontagekammer (20) in Richtung einer externen Befestigungseinrichtung (100) während der Montage des Moduls (10) ermöglicht,
**dadurch gekennzeichnet, dass**
- die Vormontagekammer (20) durch einen Graben in dem Modul (10) gebildet ist,
- die Länge des Nutensteins (50) - gesehen in Grabenlängsrichtung bei einer Ausrichtung des Nutensteins (50), die der Nutenstein (50) in seiner in die Vormontagekammer (20) eingeführten Vormontageposition einnimmt - größer ist als die Länge des Grabens in Grabenlängsrichtung und
- der Nutenstein (50) in seiner Vormontageposition in Grabenlängsrichtung gesehen vorne und hinten aus dem Graben herausragt.

5. Modul (10) nach Anspruch 4,
**dadurch gekennzeichnet, dass**
der Nutenstein (50) in einer Vormontageposition des Moduls (10) in der Vormontagekammer (20) form- und/oder kraftschlüssig gehalten wird.

6. Modul (10) nach Anspruch 4 oder 5,
**dadurch gekennzeichnet, dass**
die Innenkontur der Vormontagekammer (20) - im Querschnitt senkrecht zur Schieberichtung (S) gesehen - eine vorgegebene Ausrichtung des in der Vormontagekammer (20) befindlichen Nutensteins (50) erzwingt, so dass der Nutenstein (50) beim Herausschieben aus der Vormontagekammer (20) diese vorgegebene Ausrichtung aufweist.

7. Modul (10) nach einem der voranstehenden Ansprüche 4-6,
**dadurch gekennzeichnet, dass**
- das Modul (10) ein Schraubelement (60) aufweist, das mit einem vorderen Ende in den Nutenstein (50) eingeschraubt ist,
- die Vormontagekammer (20) eine der Nutensteinöffnung (21) entlang der Schieberichtung (S) gesehen gegenüberliegende Schraubelementöffnung (70) aufweist und
- ein Herausschieben des Nutensteins (50) aus der Nutensteinöffnung (21) heraus von außen durch Einschieben des Schraubelements (60) durch die Schraubelementöffnung (70) hindurch in die Vormontagekammer (20) erfolgen kann.

8. Fahrzeug, insbesondere Schienenfahrzeug (110), mit mindestens einem Modul (10), insbesondere einem Fahrzeugmodul, nach einem der voranstehenden Ansprüche 4-7, das am oder im Fahrzeug mittels mindestens eines Nutensteines (50) an einer fahrzeugseitigen Befestigungseinrichtung (100) befestigt ist,
**dadurch gekennzeichnet, dass**
- das Modul im Bereich der Befestigungseinrichtung (100) eine Vormontagekammer (20) aufweist, die zur vollständigen oder zumindest abschnittsweisen Aufnahme des Nutensteins (50) vor der Montage geeignet ist und ein Schieben des Nutensteins (50) aus der Vormontagekammer (20) in Richtung Befestigungseinrichtung (100) während der Montage des Moduls ermöglicht,
- die Vormontagekammer (20) durch einen Graben in dem Modul (10) gebildet ist,
- die Länge des Nutensteins (50) - gesehen in Grabenlängsrichtung bei einer Ausrichtung des Nutensteins (50), die der Nutenstein (50) in seiner in die Vormontagekammer (20) eingeführten Vormontageposition einnimmt - größer ist als die Länge des Grabens in Grabenlängsrichtung und
- der Nutenstein (50) in seiner Vormontageposition in Grabenlängsrichtung gesehen vorne und hinten aus dem Graben herausragt.

9. Fahrzeug nach Anspruch 8,
**dadurch gekennzeichnet, dass**
- die Befestigungseinrichtung (100) eine Öffnung (120) aufweist, die ein Einführen des Nutensteins (50) in die Befestigungseinrichtung (100) in einer vorgegebenen Ausrichtung relativ zur Öffnung (120) erlaubt und in einer dazu verdrehten Ausrichtung verhindert und
- die Innenkontur der Vormontagekammer (20) - im Querschnitt senkrecht zur Schieberichtung (S) gesehen - an die Innenkontur der Öffnung (120) der Befestigungseinrichtung (100) angepasst ist, so dass die Ausrichtung des vor der Montage in der Vormontagekammer (20) befindlichen Nutensteins (50) das Einführen des Nutensteins (50) in die Öffnung (120) der Befestigungseinrichtung (100) allein durch Schieben und ohne Verdrehen erlaubt.

10. Fahrzeug nach einem der voranstehenden Ansprüche 8-9,
**dadurch gekennzeichnet, dass**
die Öffnung (120) der Befestigungseinrichtung (100) schlitzförmig ist.

11. Fahrzeug nach einem der voranstehenden Ansprüche 8-10,
**dadurch gekennzeichnet, dass**
die Befestigungseinrichtung (100) durch eine Befestigungsschiene, insbesondere eine C-Schiene gebildet ist.

12. Fahrzeug nach einem der voranstehenden Ansprüche 8-11,
**dadurch gekennzeichnet, dass**
das Fahrzeugmodul ein Bodenmodul, das unten am Fahrzeugboden angebracht ist, oder ein Dachmodul, das auf dem Fahrzeugdach angebracht ist, ist.

13. Fahrzeug nach einem der voranstehenden Ansprüche 8-12,
**dadurch gekennzeichnet, dass**
- das Fahrzeug mindestens zwei fahrzeugseitige Befestigungseinrichtungen (100) in Form von parallelen Befestigungsschienen, insbesondere C-Schienen, aufweist,
- an den Befestigungsschienen jeweils zwei oder mehr Module (10) in Form von Rohrhaltemodulen angebracht sind, die jeweils Rohre des Fahrzeugs und/oder Schläuche des Fahrzeugs halten,
- die Längsrichtung der Rohre oder Schläuche des Fahrzeugs parallel zur Schienenlängsrichtung der Befestigungsschiene angeordnet ist und
- die Rohrhaltemodule in Schienenlängsrichtung der Befestigungsschiene hintereinander angeordnet sind.

## Claims

1. Method of installing a module (10) on a fastening device (100), wherein at least one sliding block (50) is used for fastening purposes, wherein
- the module (10), in the region of the fastening device (100), has a preassembly chamber (20), by means of which the sliding block (50) is accommodated, prior to installation, in full or at least in part with predetermined orientation relative to the preassembly chamber (20),
- the module (10) is oriented in the region of the fastening device (100),
- the sliding block (50) is pushed out of the preassembly chamber (20) in the direction of the fastening device (100) and, in the process, is pushed into the fastening device (100), and
- the sliding block (50) pushed into the fastening device (100) is secured in the fastening device (100), in particular by being rotated,
**characterized in that**
- the preassembly chamber (20) is formed by a trench in the module (10),
- the length of the sliding block (50) - as seen in the longitudinal direction of the trench with the sliding block (50) in an orientation which it assumes in its preassembly position, in which it is introduced into the preassembly chamber (20) - is selected to be greater than the length of the trench in the longitudinal direction of the trench, and
- in its preassembly position, the sliding block (50) projects out of the trench at the front and rear, as seen in the longitudinal direction of the trench.

2. Method according to Claim 1,
**characterized in that**
- the fastening device (100) has an opening (120) which allows the sliding block (50) to pass through - for introduction of the sliding block (50) into the fastening device (100) - when the sliding block (50) is in a predetermined orientation relative to the opening (120) and prevents said through-passage when the sliding block (50) has been rotated relative to said orientation,
- the inner contour of the preassembly chamber (20) - as seen in a cross section perpendicular to the pushing direction (S) - is adapted to the opening (120) of the fastening device (100) such that the orientation of the sliding block (50) located in the preassembly chamber (20) allows the sliding block (50) to pass through the opening (120) when the module (10) is oriented as intended relative to the fastening device (100),
- the module (10) is oriented such that the orientation of the sliding block (50) located in the preassembly chamber (20) allows the sliding block (50) to be introduced into the opening (120) of the fastening device (100),
- the sliding block (50) is pushed out of the preassembly chamber (20), and through the opening (120) of the fastening device (100), into the fastening device (100), and
- at the fastening device (100) the sliding block (50) is rotated such that it can no longer pass through the opening (120) of the fastening device (100), and is retained in the fastening device (100).

3. Method according to Claim 1 or 2,
**characterized in that**
- the module (10) has a screw-connection element (60), which has a front end screwed into the sliding block (50) ,
- the preassembly chamber (20) has a screw-connection-element opening (70), which is located opposite the sliding-block opening (21), as seen along the pushing direction (S), and is accessible from the outside on that side of the module (10) which is directed away from the fastening device (100),
- the operation of pushing the sliding block (50) out of the preassembly chamber (20) and into the fastening device (100) takes place by virtue of the screw-connection element (60) being pushed into the preassembly chamber (20) along the pushing direction (S),
- the operation of rotating the sliding block (50) in the fastening device (100) takes place by virtue of the screw-connection element (60) being turned, in particular until the sliding block (50) strikes against stops (100b) of the fastening device (100), and
- the operation of fastening the sliding block (50) on the fastening device (100) takes place by virtue of the screw-connection element (60) being screwed further into the sliding block (50) and the sliding block (50) being clamped in the fastening device (100) .

4. Module (10) for installing on a fastening device (100), wherein the module (10) has a preassembly chamber (20), which accommodates a sliding block (50), prior to installation of the module (10), in full or at least in part and makes it possible for the sliding block (50) to be displaced, along a predetermined pushing direction (S), out of a sliding-block opening (21) of the preassembly chamber (20) in the direction of an external fastening device (100) during installation of the module (10), **characterized in that**
- the preassembly chamber (20) is formed by a trench in the module (10),
- the length of the sliding block (50) - as seen in the longitudinal direction of the trench with the sliding block (50) in an orientation which it assumes in its preassembly position, in which it is introduced into the preassembly chamber (20) - is greater than the length of the trench in the longitudinal direction of the trench, and
- in its preassembly position, the sliding block (50) projects out of the trench at the front and rear, as seen in the longitudinal direction of the trench.

5. Module (10) according to Claim 4,
**characterized in that**,
in a preassembly position of the module (10), the sliding block (50) is retained in a form-fitting and/or force-fitting manner in the preassembly chamber (20).

6. Module (10) according to Claim 4 or 5,
**characterized in that**
the inner contour of the preassembly chamber (20) - as seen in a cross section perpendicular to the pushing direction (S) - imposes a predetermined orientation on the sliding block (50) located in the preassembly chamber (20), and therefore the sliding block (50) has this predetermined orientation as it is being pushed out of the preassembly chamber (20).

7. Module (10) according to one of preceding Claims 4-6,
**characterized in that**
- the module (10) has a screw-connection element (60), which has a front end screwed into the sliding block (50) ,
- the preassembly chamber (20) has a screw-connection-element opening (70), which is located opposite the sliding-block opening (21), as seen along the pushing direction (S), and
- an operation of pushing the sliding block (50) out of the sliding-block opening (21) from the outside can take place by virtue of the screw-connection element (60) being pushed through the screw-connection-element opening (70) into the preassembly chamber (20).

8. Vehicle, in particular rail vehicle (110), having at least one module (10), in particular a vehicle module, according to one of preceding Claims 4-7, said module, on or in the vehicle, being fastened on a vehicle-mounted fastening device (100) by means of at least one sliding block (50),
**characterized in that**
- the module, in the region of the fastening device (100), has a preassembly chamber (20), which is suitable for accommodating the sliding block (50), prior to installation, in full or at least in part and makes it possible for the sliding block (50) to be pushed out of the preassembly chamber (20) in the direction of the fastening device (100) during installation of the module,
- the preassembly chamber (20) is formed by a trench in the module (10),
- the length of the sliding block (50) - as seen in the longitudinal direction of the trench with the sliding block (50) in an orientation which it assumes in its preassembly position, in which it is introduced into the preassembly chamber (20) - is greater than the length of the trench in the longitudinal direction of the trench, and
- in its preassembly position, the sliding block (50) projects out of the trench at the front and rear, as seen in the longitudinal direction of the trench.

9. Vehicle according to Claim 8,
**characterized in that**
- the fastening device (100) has an opening (120) which allows the sliding block (50) to be introduced into the fastening device (100) in a predetermined orientation relative to the opening (120) and prevents said introduction when the sliding block has been rotated relative to said orientation, and
- the inner contour of the preassembly chamber (20) - as seen in a cross section perpendicular to the pushing direction (S) - is adapted to the inner contour of the opening (120) of the fastening device (100), and therefore the orientation of the sliding block (50) located, prior to installation, in the preassembly chamber (20) allows the sliding block (50) to be introduced into the opening (120) of the fastening device (100) solely by a pushing action, without any rotation.

10. Vehicle according to either of preceding Claims 8-9,
**characterized in that**
the opening (120) of the fastening device (100) is in the form of a slot.

11. Vehicle according to one of preceding Claims 8-10,
**characterized in that**
the fastening device (100) is formed by a fastening rail, in particular a C rail.

12. Vehicle according to one of preceding Claims 8-11,
**characterized in that**
the vehicle module is a floor module, which is fitted at the bottom on the vehicle floor, or a roof module, which is fitted on the vehicle roof.

13. Vehicle according to one of preceding Claims 8-12,
**characterized in that**
- the vehicle has at least two vehicle-mounted fastening devices (100) in the form of parallel fastening rails, in particular C rails,
- the fastening rails each have fitted on them two or more modules (10) in the form of tube-retaining modules, which each retain tubes of the vehicle and/or hoses of the vehicle,
- the longitudinal direction of the tubes or hoses of the vehicle is arranged parallel to the longitudinal direction of the fastening rail, and
- the tube-retaining modules are arranged one behind the other in the longitudinal direction of the fastening rail.

## Revendications

1. Procédé de montage d'un module ( 10 ) sur un dispositif ( 100 ) de fixation, dans lequel on utilise au moins un coulisseau ( 50 ) pour la fixation, dans lequel
- le module ( 10 ) a, dans la région du dispositif ( 100 ) de fixation, une chambre ( 20 ) de pré-montage, par laquelle on reçoit le coulisseau ( 50 ) avant le montage, complètement ou au moins par partie, dans une orientation donnée à l'avance par rapport à la chambre ( 20 ) de pré-montage,
- on oriente le module ( 10 ), dans la région du dispositif ( 100 ) de fixation,
- on fait glisser le coulisseau ( 50 ) hors de la chambre ( 20 ) de pré-montage, dans la direction du dispositif ( 100 ) de fixation, et on le fait ainsi glisser au sein du dispositif ( 100 ) de fixation et
- on bloque, dans le dispositif ( 100 ) de fixation, notamment par rotation, le coulisseau ( 50 ) ayant coulissé au sein du dispositif ( 100 ) de fixation,
**caractérisé en ce que**
- on forme la chambre ( 20 ) de pré-montage par un sillon dans le module ( 10 )
- on choisit la longueur du coulisseau ( 50 ) - considéré dans la direction longitudinale du sillon, pour une orientation du coulisseau ( 50 ), que prend le coulisseau ( 50 ) dans sa position de pré-montage, alors qu'il est introduit dans la chambre ( 20 ) de pré-montage - plus grande que la longueur du sillon dans la direction longitudinale du sillon et
- le coulisseau ( 50 ) dépasse, dans sa position de pré-montage, de l'avant et de l'arrière du sillon, considéré dans la direction longitudinale du sillon.

2. Procédé suivant la revendication 1,
**caractérisé en ce que**
- le dispositif ( 100 ) de fixation a une ouverture ( 120 ), qui permet un passage du coulisseau ( 50 ) - pour l'introduction du coulisseau ( 50 ) dans le dispositif ( 100 ) de fixation - dans une orientation donnée à l'avance du coulisseau ( 50 ) par rapport à l'ouverture ( 100 ) et qui empêche d'orienter le coulisseau ( 50 ) par rapport à cette orientation,
- le contour intérieur de la chambre ( 20 ) de pré-montage - considéré en section transversale perpendiculairement à la direction ( S ) de glissement - est adapté à l'ouverture ( 120 ) du dispositif ( 100 ) de fixation, de manière à ce que l'orientation du coulisseau ( 50 ), se trouvant dans la chambre ( 20 ) de pré-montage, permette le passage du coulisseau ( 50 ) dans l'ouverture ( 120 ) lorsque le module ( 10 ) est orienté comme il convient par rapport au dispositif ( 100 ) de fixation,
- on oriente le module ( 10 ), de manière à ce que l'orientation du coulisseau ( 50 ), se trouvant dans la chambre ( 20 ) de pré-montage, permette l'introduction du coulisseau ( 50 ) dans l'ouverture ( 120 ) du dispositif ( 100 ) de fixation,
- on fait glisser le coulisseau ( 50 ) , de la chambre ( 20 ) de pré-montage dans le dispositif ( 100 ) de fixation, en passant par l'ouverture ( 120 ) du dispositif ( 100 ) de fixation et
- on fait tourner le coulisseau ( 50 ) sur le dispositif ( 100 ) de fixation, de manière à ce qu'il ne puisse plus passer dans l'ouverture ( 120 ) du dispositif ( 100 ) de fixation et qu'il soit maintenu dans le dispositif ( 100 ) de fixation.

3. Procédé suivant la revendication 1 ou 2,
**caractérisé en ce que**
- le module ( 10 ) a un élément ( 60 ) à vis, qui est vissé par une extrémité avant dans le coulisseau ( 50 ),
- la chambre ( 20 ) de pré-montage a une ouverture ( 70 ) d'élément de vis, qui, considéré suivant la direction ( S ) de glissement, est opposée à l'ouverture ( 21 ) du coulisseau et est accessible de l'extérieur, du côté du module ( 10 ) éloigné du dispositif ( 100 ) de fixation,
- le glissement du coulisseau ( 50 ), hors de la chambre ( 20 ) de pré-montage et dans le dispositif ( 100 ) de fixation, s'effectue par un glissement de l'élément ( 60 ) de vis dans la chambre ( 20 ) de pré-montage dans la direction ( S ) de glissement,
- la rotation du coulisseau ( 50 ), dans le dispositif ( 100 ) de fixation, s'effectue par rotation de l'élément ( 60 ) à vis, notamment jusqu'à ce que le coulisseau ( 50 ) butte sur des butées ( 100b ) du dispositif ( 100 ) de fixation et
- la fixation du coulisseau ( 50 ), sur le dispositif ( 100 ) de fixation, s'effectue par un autre vissage de l'élément ( 60 ) à vis dans le coulisseau ( 50 ) et par coincement du coulisseau ( 50 ) dans le dispositif ( 100 ) de fixation.

4. Module ( 10 ) de montage sur un dispositif ( 100 ) de fixation, dans lequel le module ( 10 ) a une chambre ( 20 ) de pré-montage, qui reçoit complètement, ou au moins par partie, un coulisseau ( 50 ) avant le montage du module et rend possible, pendant le montage du module ( 10 ), de glisser le coulisseau ( 50 ) dans une direction ( S ) de glissement donnée à l'avance, hors d'une ouverture ( 21 ) de coulisseau de la chambre ( 20 ) de pré-montage, en direction d'un dispositif ( 100 ) extérieur de fixation,
**caractérisé en ce que**
- la chambre ( 20 ) de pré-montage est formée par un sillon dans le module ( 10 ),
- la longueur du coulisseau ( 50 ) - considéré dans la direction longitudinale du sillon, pour une orientation du coulisseau ( 50 ) que prend le coulisseau ( 50 ) dans sa position de pré-montage où il est introduit dans la chambre ( 20 ) de pré-montage - est plus grande que la longueur du sillon dans la direction longitudinale du sillon et
- le coulisseau ( 50 ) dépasse, dans sa position de pré-montage, de l'avant et de l'arrière du sillon, considéré dans la direction longitudinale du sillon.

5. Module ( 10 ) suivant la revendication 4,
**caractérisé en ce que**
le coulisseau ( 50 ) est, dans une position de pré-montage du module ( 10 ), retenu, à complémentarité de forme et/ou à coopération de force, dans la chambre ( 20 ) de pré-montage.

6. Module ( 10 ) suivant la revendication 4 ou 5,
**caractérisé en ce que**
le contour intérieur de la chambre ( 20 ) de pré-montage - considéré dans la section transversale perpendiculaire à la direction ( S ) de glissement - oblige le coulisseau ( 50 ), se trouvant dans la chambre ( 20 ) de pré-montage, à avoir une orientation donnée à l'avance, de manière à ce que le coulisseau ( 50 ) ait cette orientation donnée à l'avance lorsqu'il glisse hors de la chambre ( 20 ) de pré-montage.

7. Module ( 10 ) suivant l'une des revendications précédentes 4 à 6,
**caractérisé en ce que**
- le module ( 10 ) a un élément ( 60 ) à vis, qui est vissé par une extrémité avant dans le coulisseau ( 50 ),
- la chambre ( 20 ) de pré-montage a une ouverture ( 70 ) d'élément à vis opposée, considéré dans la direction ( S ) de glissement, à l'ouverture ( 21 ) de coulisseau,
- un glissement du coulisseau ( 50 ), hors de l'ouverture ( 21 ) de coulisseau, peut s'effectuer de l'extérieur, par glissement de l'élément ( 60 ) à vis, dans la chambre ( 20 ) de pré-montage, en passant par l'ouverture ( 70 ) de l'élément à vis.

8. Véhicule, notamment véhicule ( 110 ) ferroviaire, comprenant au moins un module ( 10 ), notamment un module de véhicule, suivant l'une des revendications précédentes 4 à 7, qui est fixé sur ou dans le véhicule, au moyen d'au moins un coulisseau ( 50 ) à un dispositif ( 100 ) de fixation du côté du véhicule,
**caractérisé en ce que**
- le module a, dans la région du dispositif ( 100 ) de fixation, une chambre ( 20 ) de pré-montage, qui est propre, avant le montage, à recevoir, complètement ou au moins par partie, le coulisseau ( 50 ) et qui permet, pendant le montage du module, au coulisseau ( 50 ) de glisser hors de la chambre ( 20 ) de pré-montage en direction du dispositif ( 100 ) de fixation,
- la chambre ( 20 ) de pré-montage est formée par un sillon dans le module ( 10 ),
- la longueur du coulisseau ( 50 ) - considéré dans la direction longitudinale du sillon, alors que le coulisseau ( 50 ) est orienté, de manière à ce que le coulisseau ( 50 ) prenne sa position de pré-montage dans laquelle il est introduit dans la chambre ( 20 ) de pré-montage - est plus grande que la longueur du sillon dans la direction longitudinale du sillon et
- le coulisseau ( 50 ) dépasse, dans sa position de pré-montage, de l'avant et de l'arrière du sillon, considéré dans la direction longitudinale du sillon.

9. Véhicule suivant la revendication 8,
**caractérisé en ce que**
- le dispositif ( 100 ) de fixation a une ouverture ( 120 ), qui permet d'introduire le coulisseau ( 50 ) dans le dispositif ( 100 ) de fixation, suivant une orientation donnée à l'avance par rapport à l'ouverture ( 120 ) et qui l'empêche, lorsque l'orientation est tournée par rapport à celle-ci, et
- le contour intérieur de la chambre ( 20 ) de pré-montage - considéré dans la section transversale perpendiculaire à la direction ( S ) de glissement - est adapté au contour intérieur de l'ouverture ( 120 ) du dispositif ( 100 ) de fixation, de manière à ce que l'orientation du coulisseau ( 50 ), se trouvant avant le montage dans la chambre ( 20 ) de pré-montage, permette l'introduction du coulisseau ( 50 ) dans l'ouverture ( 120 ) du dispositif ( 100 ) de fixation, seulement par glissement et sans rotation.

10. Véhicule suivant l'une des revendications précédentes 8 à 9,
**caractérisé en ce que**
l'ouverture ( 120 ) du dispositif ( 100 ) de fixation est en forme de fente.

11. Véhicule suivant l'une des revendications précédentes 8 à 10,
**caractérisé en ce que**
le dispositif ( 100 ) de fixation est formé par un rail de fixation, notamment un rail en C.

12. Véhicule suivant l'une des revendications précédentes 8 à 11,
**caractérisé en ce que** le module de véhicule est un module de plancher, qui est mis sous le plancher du véhicule, ou un module de toit, qui est mis sur le toit du véhicule.

13. Véhicule suivant l'une des revendications précédentes 8 à 12,
**caractérisé en ce que**
le véhicule a au moins deux dispositifs ( 100 ) de fixation du côté du véhicule, sous la forme de rails de fixation parallèles, notamment de rails en C,
- sur les rails de fixation, sont mis respectivement deux ou plusieurs modules ( 10 ), sous la forme de modules de maintien de tuyaux, qui maintiennent des tuyaux du véhicule et/ou des conduits souples du véhicule,
- la direction longitudinale du tuyau ou des conduits souples du véhicule est parallèle à la direction longitudinale des rails de fixation et
- les modules de maintien de tuyau sont disposés les uns derrière les autres dans la direction longitudinale des rails de fixation.
